# EUROPEAN PATENT SPECIFICATION

(11) **EP 1 656 624 B1**
(45) Date of publication and mention of the grant of the patent: **10.01.2018**
(21) Application number: 03753817.0
(22) Date of filing: 17.10.2003
(51) Int. Cl.: G06F 21/33, G06F 21/35, G06F 21/10, H04L 9/32, H04N 21/254, H04W 4/00, G06F 17/30

(54) **METHOD, SYSTEM AND DEVICE FOR MOBILE ACCESS OF SUBSCRIPTION CONTENT**
METHODE, SYSTEM UND GERÄT FÜR MOBILEN ZUGRIFF AUF ABONNIERTE INHALTE
PROCEDE, SYSTEME ET DISPOSITIF PERMETTANT L'ACCES MOBILE A UN CONTENU D'ABONNEMENT

(30) Priority: 23.08.2003 GB 0319918
(43) Date of publication of application: 17.05.2006
(73) Proprietor: Lenovo (Singapore) Pte. Ltd., Singapore 556741 (SG)
(72) Inventor: CAMERON, Elizabeth, Williams, Greenock PA16 8BU (GB); CAMERON, Gavin, Munro, Greenock PA16 8BU (GB); SAGGU, Manjit, Singh, Glasgow G61 1HB (GB); AMODEO, Ojeda, Guillermo, Largs KA30 8BL (GB); CAMERON, Elizabeth, Williams, Greenock PA16 8BU (GB); CAMERON, Gavin, Munro, Greenock PA16 8BU (GB); SAGGU, Manjit, Singh, Glasgow G61 1HB (GB); AMODEO, Ojeda, Guillermo, Largs KA30 8BL (GB)
(74) Representative: Phillips & Leigh LLP
(86) International application number: PCT/GB2003/004511
(87) International publication number: WO 2005/020097

(56) References cited:
- WO-A-01/90858
- WO-A1-01/35571
- US-A- 6 055 314
- US-A1- 2002 069 364
- US-A1- 2003 025 603

## Description

This invention relates to mobile subscription content access, and encompasses (though is not restricted to) a system whereby a person who subscribes to content published for subscription may access that content anywhere there is a suitably equipped receiver.

In the field of this invention it is known that subscription channels on television are accessed using a smartcard (i.e., a data carrier with processing function). The smartcard may be carried around and used with a suitable receiver to allow the subscriber to view the paid for channels anywhere there is coverage.

However, this approach has the disadvantage that it results in multiple smartcards being required for each of many and varied purposes. The smartcard has to be used with a reader that it is presented to and multiple smartcards are required to cover various different activities. With the rapid expansion of the internet and more and more content and services becoming available on the internet from content providers, a portable system is required to allow content to be viewed anywhere there is a suitable receiver, for example, a hotel bedroom where web access is provided, now or in the future.

Location information services are known from patent publications WO 01/91485, WO 02/19747, WO 02/087273 and WO 00/67112 for distribution of services to a device dependent on the device's location. However, these known location information services do not address the problem of secure access to such information. US2002/069364 an internet terminal such as a touch sensitive display unit that communicates with an identification module for receiving configuration data required for establishing a connection to the internet. WO01/90858 discloses an electronic mobile data communication device such as a mobile data carrier, similar to a Smart Card, for storing information related to a holder of the device and communicating such information to a requester in a data network via a host computer. US2003/0025603 discloses a master authenticator that is worn by a user and wirelessly transmits or receives information associated with the user to a remotely located electronic device in the vicinity.

A need therefore exists for method, system and device for mobile subscription content access wherein the abovementioned disadvantages may be alleviated.

In accordance with a first aspect of the present invention there is provided a method for mobile subscription content access as claimed in claim 1.

In accordance with a second aspect of the present invention there is provided a system for mobile subscription content access as claimed in claim 11.

In accordance with a third aspect of the present invention there is provided a portable device for use in a mobile subscription content access system as claimed in claim 13.

A portable device of the present invention may be likened to the smartcard industry's ability to have multiple uses on a single card. The portable device may be considered as a "virtual smartcard" with capacity to store card information securely for many cards. The portable device may communicate with one or more receiver via a wireless medium or a suitable cradle.

Considering the present invention in the context, for example, of a television reception subscription SIM card that can be plugged into a suitable receiver to allow the user to watch the channels covered by the user's subscription. In the future, when more and more content is web based, television channels and the like will be delivered via the web to a web based device. Therefore any web device may in theory have the ability to display the content, for example, by delivery to a television screen. The present invention allows a portable user device to interact with such a web based device, in an autonomic manner, to allow the subscriber to view the content the user has subscribed for. All of the user's settings from home may be stored in the user device and passed using infrared or Bluetooth (Bluetooth is a trademark of Telefonaktiebolaget L M Ericsson) interfaces or any other method of wireless communication to the suitably equipped receiver attached to the web.

Having a portable device that contains credit card and loyalty card information is an advantage.

A system of the present invention is capable, through identification verification, of providing an "instant issue" of a smartcard, rather than have to wait days for an application to be processed and a card issued. The system is made up of distributed portions. It anticipates the growth of content and services being provided on the internet or similar medium.

The invention covers both a mobile device and the associated infrastructure necessary to complete the system.

### Brief Description of the Drawings

One method, system and device for mobile subscription content access incorporating the present invention will now be described, by way of example only, with reference to the accompanying drawings, in which:
FIG. 1 shows a block schematic diagram illustrating a system incorporating the present invention;
FIG. 2 shows a flow diagram illustrating a content access method used in the system of FIG. 1;
FIG. 3 shows a block schematic diagram illustrating features of a receiver of the system of FIG. 1; and
FIG. 4, FIG. 5 and FIG. 6 show block schematic diagrams illustrating functions of a receiver of the system of FIG. 1.

### Detailed Description of the Invention

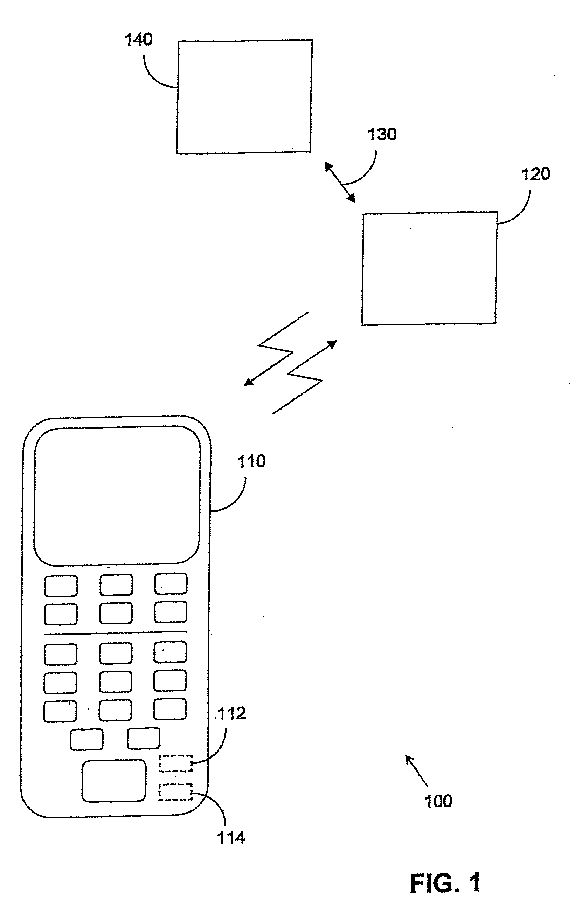

Referring firstly to FIG. 1, a mobile subscription content access system 100 allows a person who subscribes to content published for subscription to access that content anywhere there is a suitably equipped terminal/tranceiver.

The system 100 is made up of distributed portions: receiver 110, and a local terminal/transceiver 120 with which the receiver 110 interacts. The terminal/transceiver 120 is coupled, typically via the internet 130, to a remote server 140 containing the subscription content. The system thus anticipates the growth of content being provided on the internet or similar medium.

A single receiver 110 contains, in memory 112, all the subscriber's personal details for multiple content providers. The receiver is conveniently in the form of a wireless (for example, BlueTooth, InfraRed or the like) enabled device such as a personal digital assistant (PDA) or mobile phone. The memory 112 may be provided on a smartcard - not shown - inserted in the device 110. The terminal 120 is effectively a desktop box in function with an ability to handle multiple media types, very much like a personal computer (PC) system unit today can handle different formats. It may also have one or all of a smartcard reader, Infrared or Bluetooth interface to communicate with the portable device 110. As will be described in more detail below, the Bluetooth or equivalent link is used to set up the transceiver 120 proactively. All that is required is for the subscriber to be within range of the transceiver. Periodic checks may be made for the presence of the subscriber to ensure there is no abuse of the system. In the receiver 110, subscribed content received from the terminal 120 is stored in memory 114.

Content may be in any format, such as audio, video or text. For example, music may be purchased online and be available to the purchaser for subsequent download anywhere. There is no requirement to purchase CDs, etc. When a purchaser wants to listen to the music, he visits a web page in order to do so.

The encryption key may either be sent from the source of the content after validation of the subscriber or from information held on the receiver device 110.

As content providers may use different encoding techniques, it may be a requirement that the decoding algorithm be downloaded prior to access being granted.

It is assumed that a terminal 120 with this type of capability and content providers developing code to decode the content being sent are available.

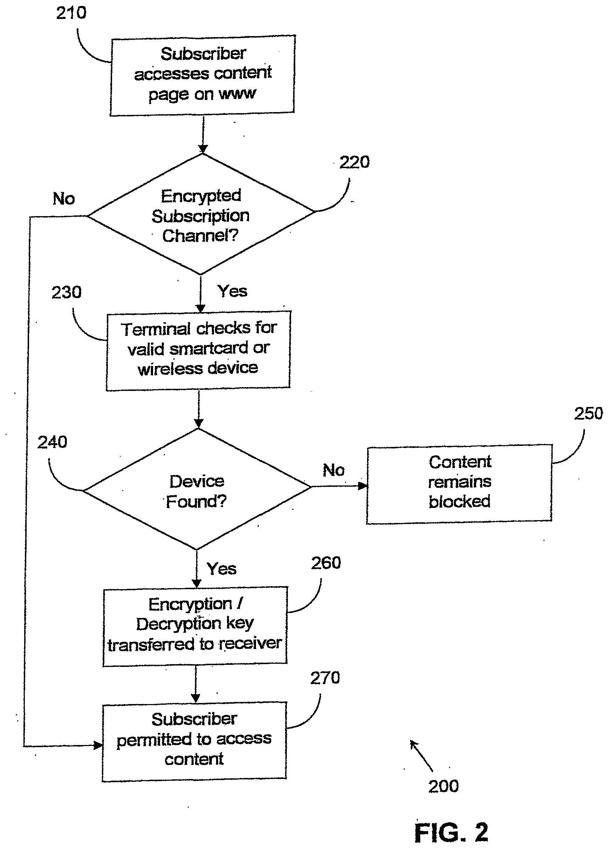

Referring now also to FIG. 2, in use of the system 100, the method 200 is employed for accessing subscription content. At step 210, the subscriber, with the receiver device 110, accesses a content page on the world wide web. At step 220, the terminal 120 checks whether the requested content is on an encrypted subscription channel; if not, then the subscriber is permitted to access the content at step 260 as will be described below; if so, then at step 230 the terminal checks for a valid smartcard or wireless device (using the information in the device's memory 112). At step 240, if no valid device is found the requested content remains blocked to the user at step 250. At step 260, if a valid device is found at step 240 an appropriate encryption / decryption key is transferred to the receiver device 110 (and stored in the device's memory 112 or 114). At step 270, the subscriber is permitted to access the requested content.

As will be described in greater detail below, the appropriate subscribed content may be automatically downloaded from an appropriate server 140 and speculatively cached in the device's memory 114 when the device 110 becomes within range of a terminal 120.

It will be appreciated that access of this nature distinguishes the system 100 from known systems, and provides improved security. The encryption algorithms can be stored on the device allowing multiple subscriptions to be easily transported. In the same manner as a universal remote control device, the wireless device can be programmed to operate with any suitable receiver. The one or more terminals 120 may be capable of storing multiple algorithms, and these may only be downloaded on an 'as required' basis and once downloaded may be stored locally, for example, in memory 112 or 114, for immediate subsequent use.

As referred to above, the access system 100 uses a digital identification mechanism to trigger speculative cache fills from a data source, in this case from the internet. The digital identification is encrypted for security and also acts as a "pass key" to other services to which the holder is entitled. Download to, and access of, the data are to the device in proximity to the identification means. The data to be cached may be determined by the owner's "agent", that is, a profile that resides elsewhere on the network and with which the user interacts. A passthrough mode may also be provided to gain access to other services, for example, TV channels.

Ideally, the connection between the subscriber's receiver device 110 and the terminal/transceiver 120 is wireless - avoiding the need for mating sockets with the key as is required today on some satellite TV systems for example. By the adoption of relevant standards ubiquitous usage is envisaged.

It will be appreciated there are many possible extensions to this idea - secure intranet access for example - that are consistent with the "always on, data anywhere" pervasive computing model that has been predicted to become the Information Technology norm.

It will be understood that since the portable device may act like an electronic passport, an overall control chip may be required that uniquely identifies the holder. This is the key personalisation module for the device, holding the user's photo ID and/or biometrics.

It will be understood that in practice, the following concerns may arise:
1. in the event that more than one download device is within range of the identification mechanism, some means of arbitrating the destination device is needed, and
2. some means is required to prevent others from accessing the data downloaded, for example, if the proper owner is in a busy area such as an hotel foyer, a train station or an internet café, to stop the device from triggering and allowing others to use the proper owner's ID.

It will be appreciated that both of the concerns may be addressed by the use of a bio-recognition system embedded in the identification mechanism, such as a retinal scan, fingerprint recognition or the like, although a simple PIN code may alternatively be used.

A secondary issue is that since bandwidth is not free, accounting for the speculative data transferred may require the user to specifically initiate the action.

Two particular examples of use of the system of FIG. 1 are as follows:

### Example (1) - Business Traveller

The business traveller needs to book a hotel and travel. He is not at his normal place of work, nor does he have access to his normal personal computer (PC). Instead he uses a wireless equipped PC of a colleague to visit his travel agency's website where he arranges all the travel. Instead of having to identify himself to the website, by visiting it the PC has polled by wireless to see if a suitable device is present. Recognising the device or devices in the area, it is a simple matter for the business traveller to confirm his identity by the use of a PIN or a password. All other information such as seating preference, loyalty card number, credit card data, etc., is transferred from his portable device to the website. If an application has been loaded on the PDA, he is able to also enter destination and travel dates, offline. These too are then transferred from the PDA to the PC.

In a more mature version of the system, the traveller enters all his travel requirements onto his device and the device itself seeks out a suitable portal to connect to the travel agent, either by General System for Mobile (GSM) communications-like technology or, where no signal exists, by using redundant capacity on a suitable equipped and networked device such as a PC. The portable device may establish a secure wireless connection via the other device.

Confirmation details of the travel arrangements may be sent to the portable device. If the device has moved outside the range of the networked system, it may continue to poll the travel agent website via any Wireless Access Point it can secure a connection on.

The business traveller now has all his details, including an effective 'eTicket'.

Upon arrival at the departure airport, his arrival is announced to the airline by passing through portals at the entrances. Any flight detail changes are automatically relayed to his portable device to alert the passenger. Also sent to the portable device are Gate Number information and directions to the Gate from his point of entry.

The next stage is to pass through the security check. There is no manual checking of tickets required and the security staff are presented with by an image that has been requested from the security portal to verify the traveller.

The boarding of the aircraft may similarly be verified.

On arrival at the destination, directions for transfers and ongoing surface travel are sent to the portable device. If the business traveller has chosen to rent a car, his travel on the courtesy bus to the rental compound is transmitted ahead of him to the rental compound and his car is ready for him, all his driver licence details having been transmitted. The portable device then receives an immobiliser code from the rental company that allows the business travel to drive the car. Any code not recognised prevents unauthorised use of the car. If there are any restrictions on the driver, such as a new driver restricted to a speed limit, these are transferred to the car management system. His destination is also programmed into the car's navigation system.

On arrival at his hotel, again by walking through a portal at the entrance, he is effectively booked in and can proceed immediately to his bedroom where his portable device acts like a room key. On entering his room, he decides he wants to watch his favourite subscription television channel on the television set in the room. The portable device will already have communicated with the set and established a "channel list" based upon the subscriptions the business traveller has stored on his portable device. The business traveller can use his portable device as a remote control.

Whilst staying in the hotel the business traveller may earn loyalty points as he consumes food and drink and makes use of fee-paying services. These points are be automatically tallied on his virtual loyalty card. His "bill" may be continually updated at each service point he visits. In the room, if he orders room service, the cost may be added.

At checkout time, the business traveller instigates the checkout procedure from his portable device, again confirming payment by his authorisation code, using, if appropriate any redeemable loyalty points.

### Example (2) - Bank Card with Cirrus features (Cirrus is a trademark of Cirrus System, Inc.)

A person needs to travel abroad urgently and needs access to funds when abroad. In the current situation, the traveller applies for a bank card and the issuing authority sends out a card after one or two days.

With the device 110 and its inherent security features, the traveller is able to apply for a card at a suitable terminal, the traveller's identity and validation checks are performed electronically and if all is successful, the portable device has the issuer's smartcard downloaded and activated without delay.

In summary, the system 100 can be considered as comprising a personalised, multifunction, portable device 110 and base stations 120 that can also perform multiple functions depending on their deployed situation. The portable device 110 integrates all the functions described and dispenses with the complexity of multiple smartcards, governing and sharing cards. The functionality is all be contained in a contactless environment within the portable device, like virtual machines or smart cards. Personalisation and/or Issue is by an authority in the same manner as current passports are issued. The portable device may be likened to a mobile phone with PDA, smart card and security functions added that automate many of the tasks facing the consumer, retailer end provider of service through a standard methodology of integrating all the services, concentrating them on the portable device.

For example, in open country the portable device acts simply like a mobile phone. Within the confines of a hotel it adopts, amongst other functions, the additional functions of a security key and a billing system. As a bearer approaches a suitably equipped establishment, he enters coverage and a handshake with the establishment takes place, effectively announcing the arrival of the bearer to all the facilities of the establishment. If it is a hotel, the hotel system sends details of his check-in to the device, inform him of his room number and any messages or special facilities and the like. The bearer proceeds to his room, guided by prompts on his device as he passes from coverage area to coverage area, similar in concept to a cell phone passing from one cell to another. On arrival at his room the door is unlocked, automatically, as a security key has been programmed by the hotel system into the portable device. This key replaces the need for the electronic or punch card systems currently used for hotel security. On entering the room the entertainment centre has already been programmed to receive all the subscription channels and other favourites that the bearer has paid to receive. No longer will his subscription to his Sports Channel, for example, be left unused at home while he travels on business - it will travel with him and his portable device is the key to unlocking the content he subscribes to, or already has paid for. Some of the obvious benefits of this system, seen in the above example, are to remove the need for a manual check-in. On leaving the same process may operate in reverse where the bearer agrees to the invoice presented to him on his portable device, he "approves" it and on departure the checkout is conducted without the usual early morning need to join the checkout queue.

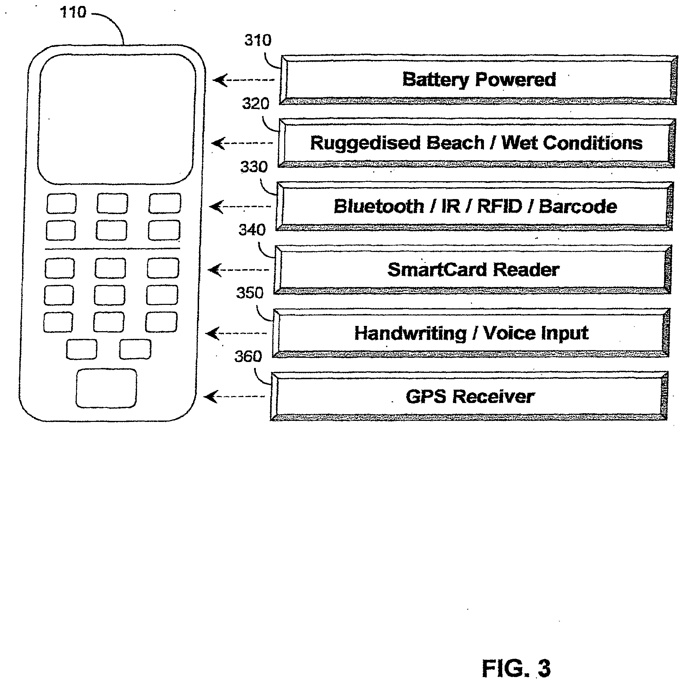

Referring now also to FIG. 3, the portable device 110 conveniently incorporates the following features: it is battery powered (310), it is ruggedised for beach or wet conditions (320), it has Bluetooth, infra-red (IR) or radio frequency identification (RFID) interfaces (330), it has a smartcard reader (340), it can accept handwriting or voice input (350) and it incorporates a Global Positioning by Satellite (GPS) receiver (360). Preferably the device contains a solar powered backup system for the battery.

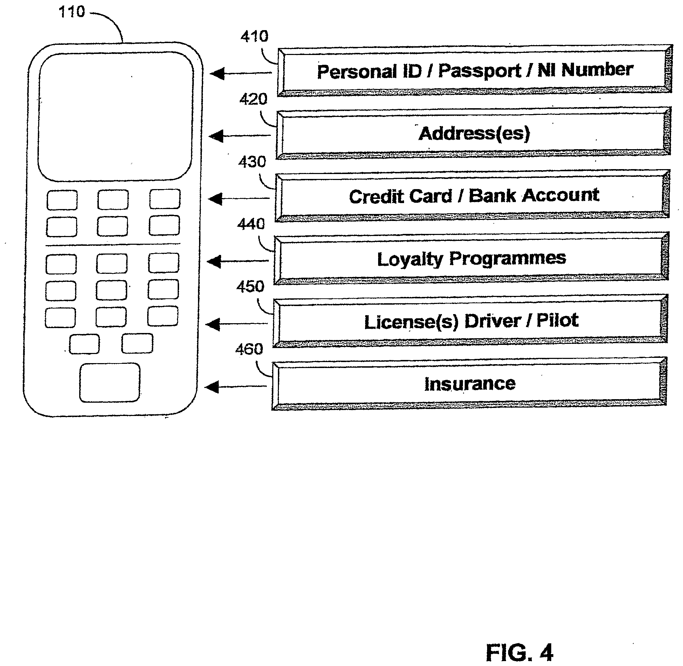

Referring now also to FIG. 4, the portable device 110 allows a variety of functions. As shown at 410, for Personal, Passport, National Insurance (NI) or Social Security number use, a picture of the bearer and details such as the NI or Social Security Number are held in ROM.

When approaching a Passport Control or a similar station where ID has to be verified the bearer walks through a portal where the information held in ROM may be transmitted to a suitably equipped receiver. Biometrics (Face Recognition or Finger Prints) may be verified from a central repository based upon connectivity details transmitted. This allows for denial of entry to be automated.

The system may also form the basis for Photo ID for cash or credit transactions where the Point of Sale Terminal may have a suitable receiver or PIN number or biometric authorisation.

As shown at 420, address details may be automatically transmitted from the device for form filling for such applications as large value purchases, hotel reservations or car hires and the like. The address fields may be transmitted in conjunction with other appropriate fields, for example, as described above, a hotel reservation may include information from the Personal ID fields and perhaps Car Registration information. Preferred payment method, room type and the like may all be included in addition to Loyalty Scheme information. Moving around the hotel may all be automated using the device. A system to access bedrooms may be used in which the hotel sends an unlock code to the device and then the device in close proximity to the room unlocks the door when in the corridor but locks the door when in the room. Transactions in bars and restaurants may be recorded and a running bill held locally on the device for the user to view during prolonged stays. This only requires provision of wireless access points for the device. With the ability to verify the user, the chance of fraudulent charging to room accounts is removed.

As shown at 430, payments from credit or debit cards may be carried out electronically with the bearer's picture being visible to the retailer or supplier of service. Account transfers between devices may also be permitted. "Lend me some money, please" may result in an electronic handshake between devices. A scheme to prevent "snooping" of details may be used such as setting up a secure link between the devices using encryption prior to authorising the cash or credit transaction. For multiple card holders on single accounts, the prime account holder may establish the credit limit for the secondary card holders, something that is currently not possible. Running totals of credit may be made available on the device with links available at Point of Sales (POS) Terminals to permit consolidation of all card transactions to happen without user intervention, for example, a husband and wife have two cards on one account; they are near their credit limit but are not together; the person wishing to purchase an expensive item may perform an account enquiry using the device to check their credit limit by entering a command in the proximity of a suitably equipped POS terminal that interrogates the credit card company's mainframe. Potentially the device may be used to automatically ticket people as they board passenger craft, for example, for shuttle flights in the UK.

As shown at 440, credits and redemptions from loyalty programmes and access to facilities may be held with the device. Airport lounge access, for example, may be automated. Attendants know who is in which lounge and based upon flight details held in the itinerary section of the PDA may page passengers as required. The system may record entry and exit from the lounge. Loyalty points may be awarded automatically rather than having to pass over two cards as typically is presently the case. Association may be made prior to purchases, for example, "I will take Airmiles rather than Vouchers where alternatives are on offer" (Air Miles is a trademark of Air Miles International Trading B.V.). In hotels, latest statements may constantly be available for the bearer to redeem points against services. Special offers may be transmitted and received by the device.

As shown at 450, the portable device 110 may be used to control access to a road or air vehicle by a driver or pilot, for example, permission to operate or drive heavy goods vehicle (HGV), private car, passenger service vehicle (PSV), and the like. Tachograph records may be linked to onboard computer (Personal Black Box) restrictions on speed or power which can be effected based upon the level of driver license. Roadside checks of drivers for law enforcement may be facilitated. Road tolls may be automatically transferred from a receiver in-car to a personal account. Such a concept is extendable to fares on ferries and the like. Insurance companies may tailor their charges based upon driving style, location (derived from GPS), mileage, day and/or time. To save on local storage, the system may upload at intervals to a centralised database for use at renewal time, or whenever appropriate. This use may also be linked to penalty points and the system may act as a speed limiter on a car. The system may also be used to setup driver preferences for seats and the like.

As shown at 460, an electronic certificate of insurance stored in the portable device can prevent the unauthorised driving of a road vehicle or other machinery that requires insurance to be legally driven (or if a vehicle is being driven without insurance a "Tracker" like signal may be transmitted from the vehicle to alert authorities). In the event of a road traffic accident insurance details can be shared accurately and easily between the parties.

Thus, the device may be not just a user's insurance certificate but also the user's driving license so as to prevent unlawful or restricted use of a vehicle and to provide automated insurance cover information. A receiver in a vehicle may be programmed to allow certain people to only be able to access (but not drive) the vehicle. For example, a family member who may not have a license may still open a vehicle to gain access to the passenger facilities. Likewise, friends and families may be programmed into a house security system.

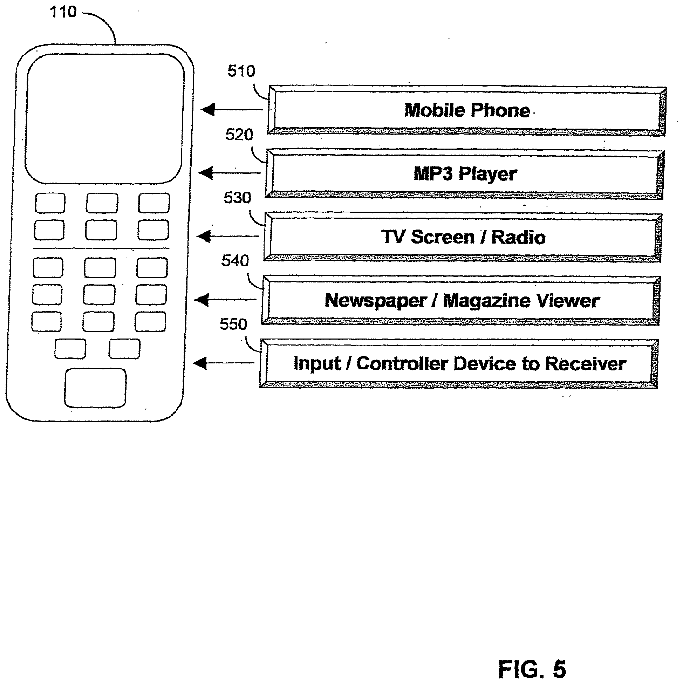

Referring now to FIG. 5, the portable device 110 allows a variety of further functions. As shown at 510, the portable device 110 may be used with standard mobile phone technology capable of taking advantage of new generation facilities using "always on" functionality, permitting the reception and transmission of data when outside the coverage of base stations that are part of the system.

As shown at 520, the portable device 110 may be used as described above to allow the bearer to download music (e.g., standard mp3 files) from a subscribed to service provider or to upload music he owns.

As shown at 530, the portable device 110 may comprise a handheld portable TV receiver and an FM/AM/Digital radio enabled as necessary through subscription information stored in the device.

As shown at 540, exploiting asymmetry between broad band download speed and narrow band upload speed, the bearer of the portable device 110 can receive an electronic copy of his periodicals, for example, newspapers and magazines), enabled as necessary through subscription information stored in the device. This is ideally suited for the travelling user to read the latest edition of his magazine without having to wait until he gets home to read the hardcopy version. It may also permit access to back-issues or allow searches and the like.

As shown at 550, the portable device 110 may act as a remote control device for the TV or whatever receiver is currently being used to receive content. However, the portable device does not have to "learn" the appropriate codes as a manual exercise, they are instead downloaded automatically to the portable device upon entering into range. A benefit of this is that the controls on the portable device retain a constant interface 'look and feel' for the user. He does not have to learn the controls of the TV, manufacturer by manufacturer.

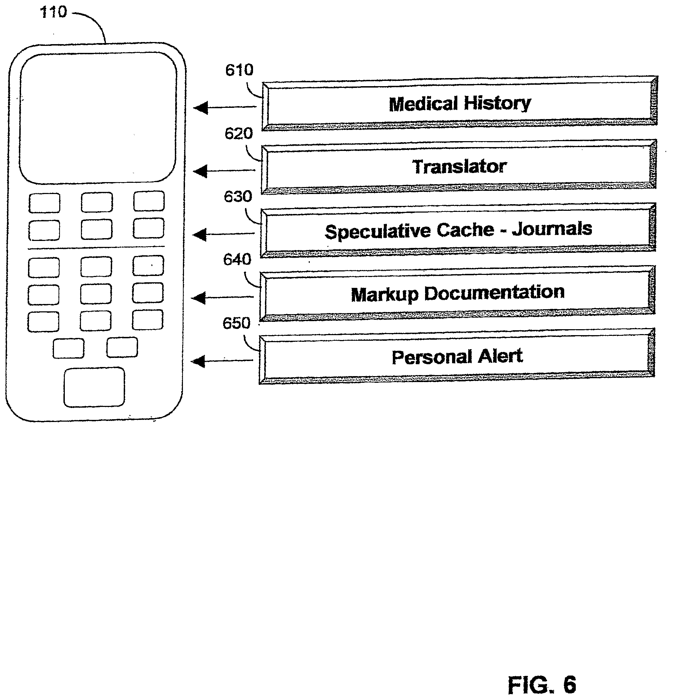

Referring now to FIG. 6, the portable device 110 allows a variety of further functions. As shown at 610, the portable device 110 may act as a repository for the bearer's medical history. In the event of an accident, any approaching medical staff equipped with a receiver may be alerted to conditions where the bearer may be allergic to or pre-existing conditions that may influence their treatment of the casualty.

As shown at 620, the portable device 110 may act as an electronic translator. By declaring the language the user is familiar with, any instructions or forms may be delivered to the portable device for the bearer to read in his native language. Likewise, the bearer may speak a phrase into the portable device in his native language and the translated phrase may be displayed on the screen or output audibly from the device. A certain amount of translation may be stored locally, for example, when in Spain the Spanish dictionary may be downloaded at a point of entry, or in the presence of a base station a centralised translation engine may be accessed via the base station, using the portable device as the terminal.

As shown at 630, the portable device 110 may prefetch information as journals and the like are being accessed. This improves the perceived response of the device as pages are held locally and accessed as such. This allows for continued use of the device in blackout areas.

As shown at 640, the portable device 110 may be used to markup or highlight documents as they are being accessed and the markups may be stored centrally for retrieval. This means that any edits are stored and are not lost. The central storage of the document remains untouched, with local storing of highlights or markups of frequently accessed information and merging of the markup information with a freshly received base document from central storage.

As shown at 650, since the portable device is personalised to an individual, incorporating a "Tracker" like capability permits the creation of a personal alert or alarm system. In the event of the bearer feeling threatened they may activate the alarm on the device that transmits the alert to the tracking authorities for them to react. If the device detects that it is no longer attached to the bearer, for example, by a skin contact missing from a probe attached to the device, an alert may be broadcast using a Bluetooth or similar connection. The portable device itself, through its ruggedised construction, may sustain a certain amount of abuse prior to ceasing to function. In that time the device is capable of transmitting an alert, which if it is not cancelled by the bearer is reacted upon by the correct authorities in the same manner as an Emergency Position Indicating Radio Beacon (EPIRB). Each portable device may be capable of relaying an alert. Utilising Mayday type procedures, the devices work like VHF radios in the hands of operators. A general broadcast may be issued when the alert has been received, greatly increasing the effective range of the device. In areas where direct transmission is not possible the alert may be carried until a suitable transmitter or receiver is located such as an underground station platform which may be equipped with a receiver. The method of transmission, above ground, for this type of activity may be similar to an EPIRB where satellites receive the emergency signals and relay them to appropriate authorities. "Stand-downs" may be broadcast via a GPS type of satellite network.

It will be understood that the system for mobile subscription content access described above provides the following advantages:
- A single device as opposed to multiple smartcards expanding the capability of mobile phone or PDAs with Bluetooth and/or IrdDa capability to incorporate the additional functions
- Immediate availability - smartcards take time to be issued. By using this system the "smartcard" may be loaded onto the portable device using the system infrastructure.
- Security - the portable device may be associated with the user through biometrics or photo or fingerprints and the like, for example, instead of unlocking the phone with a password, an integrated camera may be used to verify the user's facial features or iris or such like.
- Automated announcement of arrival and/or presence.
- Automatic speculative download and/or caching of subscribed content based on locally stored subscription data.

## Claims

1. A method for mobile subscription content access, comprising:
storing subscriber personal details and card information for multiple smartcards for multiple content providers for enabling access to subscription content in memory (112) of a portable device (110) having means for wireless communication,
identifying with the portable device (110) a terminal (120) for connection to said subscription content that the subscriber is within range of and proactively setting up the terminal;
implementing the following steps:-
• [210] accessing with the portable device (110) a content page on the world wide web
• [220] checking with the terminal (120) whether the requested content is on an encrypted subscription channel, and if not, permitting the subscriber to access the requested content,
∘ [230] if the requested content is on an encrypted subscription channel, checking with the terminal (120) for a valid smartcard granting access to the subscription content, using the card information in device memory (112).
∘ [240] if no valid smartcard or wireless device is found keeping the requested content blocked to the user [250]
• [260] transferring an appropriate encryption/decryption key to the portable device (110) and storing it in device memory (112, 114), and
• [270] permitting the subscriber to access the requested content.

2. The method of claim 1 wherein the step of delivering comprises transferring the subscription content to the portable device (110).

3. The method of claim 2, wherein the steps of receiving, obtaining and transferring occur automatically, and wherein the method further comprises, at the portable device (110), caching the transferred information for subsequent use.

4. The method of claim 2 or 3 wherein the steps of receiving and transferring occur via a wireless communication link between the portable device (110) and a terminal (120).

5. The method of claim 4 wherein the wireless link comprises one of A-B:
A Bluetooth,
B infra-red.

6. The method of any one of claims 1-5 wherein the portable device (110) is at least one of C-H:
C battery powered,
D ruggedised for adverse conditions,
E Bluetooth enabled,
F IR enabled,
G RFID enabled,
H barcode enabled.

7. The method of any one of claims 1-6 wherein the portable device (110) has at least one of I-K:
I a smartcard reader,
J handwriting input,
K voice input.

8. The method of any one of claims 1-6 wherein the information enabling access to subscription content comprises at least one of L-V:
L personal identification information,
M address information,
N credit card information,
O loyalty program information,
P vehicular licensing information,
Q insurance information,
R subscription information,
S mobile phone information,
T music information,
U television information,
V periodical information.

9. The method of any one of claims 2-6 wherein the transferred information comprises at least one of W-Y:
W remote control information,
X medical history information,
Y translation information.

10. The method of any one of claims 2-10 wherein the portable device (110) functions, using the transferred information, as at least one of (i)-(ii) :
(i) document highlighter, document base information being stored separately from highlighting information,
(ii) personal alert device.

11. A system comprising:
a portable device (110) and a terminal (120) arranged to put into effect the method of any preceding claim.

12. A system (120) arranged as specified in Claim 11 in which the information enabling access to subscription content comprises a unique identification of the holder of the device.

13. A portable device (110) for use in a mobile subscription content access system according to either of claim 11 or 12, the portable device (110) comprising:
means for wireless communication
means (112) for storing information enabling access to subscription content for multiple content providers,
means to uniquely identify the holder of the device means for transmitting to a terminal (120) the information enabling access to subscription content, and
means for receiving from the terminal (120) the subscription content obtained using the transmitted information enabling access to subscription content
**characterised in that** the portable device (110) is arranged to receive from the terminal (120) an encryption/decryption key before receiving subscription content if the subscription content is on an encrypted channel.

14. The portable device (110) of claim 13, wherein the portable device (110) is arranged to transmit the information enabling access to subscription content and to receive the subscription content automatically and wherein the portable device (110) is further arranged to cache the transferred information for subsequent use.

15. The portable device (110) of claim 13 or claim 14 wherein the means for wireless communication comprises one of A-B:
A Bluetooth,
B infra-red.

16. The portable device (110) of any one of claims 13 to 15 arranged to download from the terminal (120) one or more encryption algorithms stored on the terminal (120) on an "as required" basis and store said algorithm(s) in memory (112, 114).

17. The portable device (110) of any one of claims 13-16 wherein the portable device is at least one of C-H:
C battery powered,
D ruggedised for adverse conditions,
E Bluetooth enabled,
F IR enabled,
G RFID enabled,
H barcode enabled.

18. The portable device (110) of any one of claims 13 to 17 wherein the portable device has at least one of I-K:
I a smartcard reader,
J handwriting input,
K voice input.

19. The portable device (110) of any one of claims 13 to 17 wherein the information enabling access to subscription content comprises at least one of L-V:
L personal identification information,
M address information,
N credit card information,
O loyalty program information,
P vehicular licensing information,
Q insurance information,
R subscription information,
S mobile phone information,
T music information,
U television information,
V periodical information.

20. The portable device (110) of any one of claims 13 to 17 wherein the transferred information comprises at least one of W-Y:
W remote control information,
X medical history information,
Y translation information.

21. The portable device (110) of any one of claims 13 to 20 wherein the portable device is arranged to function, using the transferred information, as at least one of (i)-(ii):
(i) a document highlighter, document base information being stored separately from highlighting information,
(ii) a personal alert device.

## Patentansprüche

1. Verfahren für mobilen Zugriff auf Abonnement-Inhalte, umfassend:
Speichern von persönlichen Daten eines Abonnenten und von Karteninformationen für mehrere Smartcards für mehrere Inhaltsanbieter zum Ermöglichen eines Zugriffs auf Abonnementinhalte in einem Speicher (112) eines tragbaren Geräts (110), welches über Mittel für drahtlose Kommunikation verfügt,
Identifizieren, durch das tragbare Gerät (110), eines Terminals (120) zur Verbindung zu besagten Abonnementinhalten in Reichweite des Abonnenten, und proaktives Einstellen des Terminals;
Implementieren der folgenden Schritte:
[210] Aufrufen, durch das tragbare Gerät (110), einer Inhaltsseite in dem World Wide Web;
[220] Prüfen, durch das Terminal (120), ob die angefragten Inhalte sich auf einem verschlüsselten Kanal befinden, und, falls nicht, Gestatten des Zugriffs auf die angefragten Inhalte durch den Abonnenten,
[230] Falls die angefragten Inhalte sich auf einem verschlüsselten Kanal befinden, Suchen, durch das Terminal (129), nach einer gültigen Smartcard, welche Zugriff auf die Abonnementinhalte gewährt, mittels der Karteninformationen in dem Speicher (112),
[240] Falls eine gültige Smartcard oder ein Drahtlosgerät nicht gefunden werden, Gesperrt Halten der angefragten Inhalte gegenüber dem Benutzer [250];
[260] Übertragen eines zugehörigen Entschlüsselungs-/Verschlüsselungs-Schlüssels zu dem tragbaren Gerät (110) und Speichern des Schlüssels in dem Speicher (112, 114); und
[270] Gestatten des Zugriffs auf die angefragten Inhalte durch den Abonnenten.

2. Verfahren nach Anspruch 1, wobei der Schritt des Auslieferns ein Übertragen der Abonnementinhalte zu dem tragbaren Gerät (110) aufweist.

3. Verfahren nach Anspruch 2, wobei die Schritte des Empfangens, Erlangens und Übertragens automatisch erfolgen, und worin das Verfahren weiter umfasst, die übertragenen Informationen bei dem tragbaren Gerät zur späteren Nutzung zwischenzuspeichern.

4. Verfahren nach einem der Ansprüche 2 oder 3, wobei die Schritte des Empfangens und des Übertragens mittels einer Drahtlosverbindung zwischen dem tragbaren Gerät (110) und dem Terminal (120) erfolgen.

5. Verfahren nach Anspruch 4, wobei die Drahtlosverbindung eine von A bis B umfasst:
A Bluetooth
B Infrarot

6. Verfahren nach einem der Ansprüche 1 bis 5, wobei das tragbare Gerät (11) mindestens eines von C bis H ist:
C Batteriebetrieben,
D Gehärtet gegen widrige Umwelteinflüsse,
E Bluetooth-fähig,
F Infrarot-fähig,
G RFID-fähig,
H Barcode-fähig.

7. Verfahren nach einem der Ansprüche 1 bis 6, wobei das tragbare Gerät (110) mindestens eines von I bis K aufweist:
I Ein Smartcard-Leser,
J Handschrifteneingabe,
K Spracheingabe.

8. Verfahren nach einem der Ansprüche 1 bis 6, wobei die Information zum Ermöglichen des Zugriffs auf Abonnementinhalte mindestens eines von L bis V umfasst:
L Persönliche Identifikationsnummer,
M Adressdaten,
N Kreditkartendaten,
O Kundenbindungsprogrammdaten,
P Fahrzeuglizenzdaten,
Q Versicherungsdaten,
R Abonnementdaten,
S Mobilfunkdaten,
T Musikinformationen,
U Fernsehinformationen,
V Zeitschrifteninformationen.

9. Verfahren nach einem der Ansprüche 2 bis 6, wobei die übertragene Information mindestens eines von W bis Y umfasst:
W Fernbedienungsdaten,
X Anamnesedaten,
Y Übersetzungsinformationen.

10. Verfahren nach einem der Ansprüche 2 bis 10, wobei das tragbare Gerät (110) mittels der übertragenen Information als mindestens eines von (i) bis (ii) fungiert:
i. Dokumentenmarker, wobei Dokumenten-Basisdaten separat von Marker-Daten gespeichert werden,
ii. Persönliches Alarmgerät.

11. System aufweisend: ein tragbares Gerät (110) und ein Terminal (120) angeordnet zum Umsetzen des Verfahrens eines der vorangegangenen Ansprüche.

12. System (120) angeordnet wie in Anspruch 11 spezifiziert, wobei die Information zum Ermöglichen des Zugriffs auf Abonnementinhalte eine eindeutige Identifikation des Besitzers des Geräts aufweist.

13. Tragbares Gerät (110) zum Einsatz in einem System zum mobilen Zugriff auf Abonnementinhalte entsprechend einem der Ansprüche 11 oder 12, wobei das tragbare Gerät (110) aufweist:
Mittel zur Drahtloskommunikation,
Mittel (112) zum Speichern von Information zum Ermöglichen des Zugriffs auf Abonnementinhalte für mehrere Inhaltsanbieter,
Mittel zum eindeutigen Identifizieren des Besitzers eines Geräts,
Mittel zum Übertragen der Information zum Ermöglichen des Zugriffs auf Abonnementinhalte an ein Terminal (120), und
Mittel zum Empfangen der Abonnementinhalte von dem Terminal (120), welche mittels der Information zum Ermöglichen des Zugriffs auf Abonnementinhalte erlangt wurden,
**gekennzeichnet dadurch, dass** das tragbare Gerät (110) angeordnet ist von dem Terminal (120) einen Verschlüsselungs-/Entschlüssungs-Schlüssel zu empfangen, bevor Abonnementinhalte empfangen werden, falls die Abonnementinhalte auf einem verschlüsselten Kanal sind.

14. Tragbares Gerät (110) nach Anspruch 13, wobei das tragbare Gerät (110) angeordnet ist zum automatischen Übertragen der Information zum Ermöglichen des Zugriffs auf Abonnementinhalte und zum automatischen Empfangen der Abonnementinhalte und wobei das tragbare Gerät (110) weiter angeordnet ist zum Zwischenspeichern der übertragenen Daten zur späteren Verwendung.

15. Tragbares Gerät (110) nach Anspruch 13 oder Anspruch 14, wobei die Mittel zur Drahtloskommunikation eines von A bis B umfassen:
A Bluetooth,
B Infrarot.

16. Tragbares Gerät (110) nach einem der Ansprüche 13 bis 15 angeordnet zum Herunterladen eines oder mehrerer auf dem Terminal (120) gespeicherten Verschlüsselungsalgorithmen nach Bedarf und zum Speichern besagter Algorithmen in dem Speicher (112, 114).

17. Tragbares Gerät (110) nach einem der Ansprüche 13 bis 16, wobei das tragbare Gerät mindestens eines von C bis H ist:
C Batteriebetrieben,
D Gehärtet gegen widrige Umwelteinflüsse,
E Bluetooth-fähig
F Infrarot-fähig,
G RFID-fähig,
H Barcode-fähig.

18. Tragbares Gerät (110) nach einem der Ansprüche 13 bis 17, wobei das tragbare Gerät mindestens eines von I bis K aufweist:
I Ein Smartcard-Leser,
J Handschrifteneingabe,
K Spracheingabe.

19. Tragbares Gerät (110) nach einem der Ansprüche 13 bis 17m wobei die Information zum Ermöglichen des Zugriffs auf Abonnementinhalte mindestens eines von L bis V umfasst:
i. Persönliche Identifikationsnummer,
ii. Adressdaten,
iii. Kreditkartendaten,
iv. Kundenbindungsprogrammdaten,
v. Fahrzeuglizenzdaten,
vi. Versicherungsdaten,
vii. Abonnementdaten,
viii. Mobilfunkdaten,
ix. Musikinformationen,
x. Fernsehinformationen,
xi. Zeitschrifteninformationen.

20. Tragbares Gerät (110) nach einem der Ansprüche 13 bis 17, wobei die übertragene Information mindestens eines von W bis Y umfasst:
W Fernbedienungsdaten,
X Anamnesedaten,
Y Übersetzungsinformationen.

21. Tragbares Gerät (110) nach einem der Ansprüche 13 bis 20, wobei das tragbare Gerät ausgebildet ist, um mittels der übertragenen Informationen als mindestens eines von (i) bis (ii) zu fungieren.
(i) Dokumentenmarker, wobei Dokumenten-Basis-Daten separat von Marker-Daten gespeichert werden,
(ii) Persönliches Alarmgerät

## Revendications

1. Procédé d'accès mobile à un contenu d'abonnement, consistant à :
mémoriser les données personnelles de l'abonné et les informations de carte pour plusieurs cartes à puce intelligentes pour plusieurs fournisseurs de contenu pour permettre l'accès au contenu d'abonnement dans une mémoire (112) d'un dispositif portable (110) ayant un moyen de communication sans fil,
identifier à l'aide du dispositif portable (110) un terminal (120) pour la connexion audit contenu d'abonnement que l'abonné se trouve dans la portée du terminal et paramétrer de manière proactive le terminal ;
mettre en oeuvre les étapes suivantes :
(210) accéder à l'aide du dispositif portable (110) une page de contenu sur le Web
(220) vérifier à l'aide du terminal (120) si le contenu demandé est sur un canal d'abonnement chiffré et si tel n'est pas le cas, permettre à l'abonné d'accéder au contenu demandé,
(230) si le contenu demandé est sur un canal d'abonnement chiffré, chercher à l'aide du terminal (120) une carte à puce intelligente valide donnant accès au contenu d'abonnement à l'aide des informations de carte dans la mémoire (112) de dispositif,
(240) si aucune carte à puce intelligente valide ou aucun dispositif sans fil n'est trouvé(e) garder le contenu demandé bloqué pour l'utilisateur (250)
(260) transférer une clé de chiffrement/déchiffrement appropriée vers le dispositif portable (110) et la mémoriser dans la mémoire (112, 114) du dispositif et
(270) permettre à l'abonné d'accéder au contenu demandé.

2. Procédé selon la revendication 1, l'étape de d'émission consiste à transférer le contenu de l'abonnement vers le dispositif portable (110).

3. Procédé selon la revendication 2, les étapes de réception, d'obtention et de transfert se produisant automatiquement et le procédé consistant en outre, dans le dispositif portable (110), à mettre en mémoire cache les informations transférées pour une utilisation ultérieure.

4. Procédé selon la revendication 2 ou 3 les étapes de réception et de transfert se produisant par l'intermédiaire d'une liaison de communication sans fil entre le dispositif portable (110) et un terminal (120).

5. Procédé selon la revendication 4, la liaison sans fil comprenant A ou B :
A Bluetooth
B infrarouge

6. Procédé selon l'une quelconque des revendications 1 à 5, le dispositif portable (110) est au moins l'un parmi C-B :
C batterie alimentée
D renforcé pour des conditions défavorable
E Bluetooth activé
F infrarouge activé
G RFID activé
H code-barres activé

7. Procédé selon l'une quelconque des revendications 1 à 6, le dispositif portable (110) ayant au moins l'un parmi I-K :
I un lecteur de carte à puce intelligente
J une entrée manuscrite
K une entrée vocale

8. Procédé selon l'une quelconque des revendications 1 à 6, les informations permettant l'accès au contenu d'abonnement comprenant au moins l'une parmi L-V :
L informations d'identification personnelle
M informations d'adresse
N informations de carte de crédit
O informations de programme de fidélité
P informations de permis de conduite
Q informations relative à l'assurance
R informations d'abonnement
S informations relatives au téléphone portable
T informations relatives à la musique
U informations relatives à la télévision
V informations périodiques

9. Procédé selon l'une quelconque des revendications 2 à 6 les informations transférées comprenant au moins l'une parmi W à Y :
W informations relatives à la télécommande
X informations relatives à l'historique médical
Y informations relatives à la traduction

10. Procédé selon l'une quelconque des revendications 2 à 10, le dispositif portable (110) fonctionnant, à l'aide des informations transférées, telles qu'au moins celles parmi (i) à (ii) :
(i) surligneur de document, informations de base de document étant mémorisées séparément des informations de mise en évidence,
(ii) dispositif d'avertissement personnel.

11. Système comprenant : un dispositif portable (110) et un terminal (120) conçu pour mettre en oeuvre le procédé selon l'une quelconque des revendications précédentes.

12. Système (120) conçu selon la revendication 11, dans lequel les informations permettant l'accès au contenu d'abonnement comprenant une identification unique du détenteur du dispositif.

13. Dispositif portable (110) destiné à être utilisé dans un système d'accès mobile à un contenu d'abonnement selon soit la revendication 11 soit la revendication 12, le dispositif portable (110) comprenant :
un moyen de communication sans fil, un moyen (112) destiné à mémoriser des informations permettant d'accéder à un contenu d'abonnement pour plusieurs fournisseurs de contenu, un moyen destiné à identifier le détendeur du moyen de dispositif destiné à transmettre au terminal (120) les informations permettant d'accès au contenu d'abonnement, et un moyen destiné à recevoir en provenance du terminal (120) le contenu d'abonnement obtenu à l'aide des informations transmises permettant l'accès au contenu d'abonnement, **caractérisé en ce que** le dispositif portable (110) est conçu pour recevoir en provenance du terminal (120) une clé de chiffrement/déchiffrement avant de recevoir le contenu d'abonnement si le contenu d'abonnement est sur un canal chiffré.

14. Dispositif portable (110) selon la revendication 13, le dispositif portable (110) étant conçu pour transmettre les informations permettant l'accès au contenu d'abonnement et pour recevoir le contenu d'abonnement automatiquement et le dispositif portable (110) étant en outre conçu pour mettre en mémoire cache les informations transférées pour une utilisation ultérieure.

15. Dispositif portable (110) selon la revendication 13 ou la revendication 14, le moyen pour la communication sans fil comprenant A ou B :
A bluetooth
B Infrarouge

16. Dispositif portable (110) selon l'une quelconque des revendications 13 à 15 conçu pour télécharger à partir du terminal (120) un ou plusieurs algorithmes mémorisés dans le terminal (120) sur une base de «au besoin » et pour mémoriser ledit/lesdits algorithme(s) dans la mémoire (112, 114).

17. Dispositif portable (110) selon l'une quelconque des revendications 13 à 16, le dispositif portable étant au moins un élément parmi C-E :
C batterie alimentée
D renforcé pour conditions défavorables,
E Bluetooth activé,
F Infrarouge activé,
G RFID activé,
H Code-barres activé.

18. Dispositif portable (110) selon l'une quelconque des revendications 13 à 17, le dispositif portable ayant au moins un élément de I à K :
I un lecteur de carte intelligente
J une entrée manuscrite
K une entrée vocale.

19. Dispositif portable (110) selon l'une quelconque des revendications 13 à 17, les informations permettant l'accès au contenu d'abonnement comprenant au moins un élément parmi L-V :
L informations d'identification personnelle
M informations d'adresse
N informations de carte de crédit
O informations de programme de fidélité
P informations de permis de conduite
Q informations relative à l'assurance
R informations d'abonnement
S informations relatives au téléphone portable
T informations relatives à la musique
U informations relatives à la télévision
V informations périodiques

20. Dispositif portable (110) selon l'une quelconque des revendications 13 à 17, les informations transférées comprenant au moins un élément de W-Y :
W informations relatives à la télécommande
X informations relatives à l'historique médical
Y informations relatives à la traduction

21. Dispositif portable (110) selon l'une quelconque des revendications 13 à 20, le dispositif portable étant conçu pour fonctionner, à l'aide des informations transférées, telles que celles parmi (i)-(ii) :
(i) un surligneur de document, des informations de base de document étant mémorisées séparément à partir des informations de mise en évidence,
(ii) un dispositif d'avertissement personnel.
